(19) Europäisches Patentamt
European Patent Office
Office européen des brevets

(11) **EP 3 662 639 B1**

(12) **EUROPÄISCHE PATENTSCHRIFT**

(45) Veröffentlichungstag und Bekanntmachung des Hinweises auf die Patenterteilung:
**27.03.2024  Patentblatt 2024/13**

(21) Anmeldenummer: **18743800.7**

(22) Anmeldetag: **23.07.2018**

(51) Internationale Patentklassifikation (IPC):
*H04L 9/40* *(2022.01)*     *H04L 67/12* *(2022.01)*
*H04L 12/40* *(2006.01)*     *G06N 3/084* *(2023.01)*
*G06N 3/044* *(2023.01)*     *G06N 3/045* *(2023.01)*
*H04L 43/50* *(2022.01)*     *H04L 41/0631* *(2022.01)*
*H04L 41/16* *(2022.01)*

(52) Gemeinsame Patentklassifikation (CPC):
**H04L 67/12; G06N 3/044; G06N 3/045;
G06N 3/084; H04L 12/40; H04L 41/0631;
H04L 41/16; H04L 43/50; H04L 63/1408;**
H04L 2012/40273

(86) Internationale Anmeldenummer:
**PCT/EP2018/069884**

(87) Internationale Veröffentlichungsnummer:
**WO 2019/025217 (07.02.2019 Gazette 2019/06)**

(54) **VERFAHREN UND VORRICHTUNG ZUM ERMITTELN VON ANOMALIEN IN EINEM KOMMUNIKATIONSNETZWERK**

METHOD AND APPARATUS FOR ASCERTAINING ANOMALIES IN A COMMUNICATION NETWORK

PROCÉDÉ ET DISPOSITIF DE DÉTERMINATION D'ANOMALIES DANS UN RÉSEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2017  DE 102017213119**

(43) Veröffentlichungstag der Anmeldung:
**10.06.2020  Patentblatt 2020/24**

(73) Patentinhaber: **Robert Bosch GmbH
70442 Stuttgart (DE)**

(72) Erfinder:
• **HANSELMANN, Markus
70563 Stuttgart (DE)**
• **STRAUSS, Thilo
71636 Ludwigsburg (DE)**
• **ULMER, Holger
89077 Ulm (DE)**
• **JUNGINGER, Andrej
70197 Stuttgart (DE)**

(56) Entgegenhaltungen:
WO-A1-2015/103514     US-A1- 2016 226 894
US-A1- 2017 076 116     US-A1- 2017 126 711

• **KE WANG ET AL: "Anagram: A Content Anomaly Detector Resistant to Mimicry Attack", 1. Januar 2006 (2006-01-01), RECENT ADVANCES IN INTRUSION DETECTION LECTURE NOTES IN COMPUTER SCIENCE;;LNCS, SPRINGER, BERLIN, DE, PAGE(S) 226 - 248, XP019042880, ISBN: 978-3-540-39723-6 das ganze Dokument**

EP 3 662 639 B1

**Beschreibung**

Die Erfindung betrifft ein Verfahren und eine Vorrichtung zum Ermitteln, ob in einem Kommunikationsnetzwerk eine Anomalie vorliegt, ein Computerprogramm, und ein maschinenlesbares Speichermedium.

Stand der Technik

In der DE 10 2009 026 995 A1 ist ein Verfahren zum Betreiben eines Bussystems, insbesondere eines CAN-Busses, beschrieben. An das Bussystem sind mehrere Stationen anschließbar. Eine übertragene Nachricht weist einen Identifier auf, wobei ein bestimmter Identifier (z.B. IDENT2) immer nur von einer einzigen Station verwendet werden darf. Jede der Stationen vergleicht den Identifier einer übertragenen Nachricht mit den von ihr selbst verwendeten Identifiern (z.B. IDENT2). Bei einer Übereinstimmung wird eine Fehlermeldung erzeugt wird.
US 2017/126711 A1 offenbart ein Verfahren und eine Vorrichtung zur Erkennung von Kommunikationsangriffen auf ein Fahrzeug-Controller Area Network (CAN). Die Vorrichtung umfasst: ein Lernmodul, ein Profilierungsmodul und ein Erkennungsmodul. Das Lernmodul identifiziert einen CAN-Identifikator (ID) beim Empfang eines vordefinierten CAN-Pakets und erzeugt statistische Lerninformationen, ausgedrückt als Bits in Bezug auf ein Datenfeld, das dem identifizierten CAN-Identifikator entspricht.

Vorteil der Erfindung

Das Verfahren mit den Merkmalen des unabhängigen Anspruchs 1 hat demgegenüber den Vorteil, dass eine einfache und wirksamere Erkennung von Anomalien in einem Kommunikationsnetzwerk möglich ist. Vorteilhafte Weiterbildungen sind Gegenstand der unabhängigen Ansprüche.

Offenbarung der Erfindung

Ein wichtiger Aspekt heutiger Maschinen, Geräte und Systeme besteht in deren internem sowie externem Datenaustausch. Innerhalb eines Geräts werden Daten beispielsweise zwischen einzelnen Bauteilen ausgetauscht, um deren gewünschtes Zusammenwirken zu ermöglichen (z. B. zwischen Steuergeräten in einem Kraftfahrzeug). Ein externer Datenaustausch kann beispielsweise zwischen unabhängigen Geräten derselben Art erfolgen (z. B. zwischen mehreren Fahrzeugen, die sich gemeinsam im selben Verkehr bewegen, oder zwischen Haushaltsgeräten, die innerhalb eines vernetzten Hauses miteinander kommunizieren).
In einem realen Zusammenschluss kommunizierender Systeme und Geräte kann der Datenverkehr dabei grundsätzlich in zwei Gruppen unterteilt werden: Die erste Gruppe, das "Normalverhalten", beschreibt die Art des Datenverkehrs wie er im normalen Betrieb - d.h. ohne Fehler, Ausfälle, äußere Manipulationen o. ä. - anfallen. In einem korrekt arbeitenden System treten dann nur fehlerfreie Daten auf und die einzelnen Daten hängen im Allgemeinen durch spezifische (sowohl stationäre als auch zeitlich veränderliche) Korrelationen voneinander ab.
Die zweite Gruppe, "Anomalien", beschreibt die Art des Datenverkehrs, der vom "Normalverhalten" abweicht. Aus verschiedenen Gründen können im realen Betrieb in den Daten Abweichungen vom Normalverhalten auftreten. Ursachen dafür können beispielsweise folgender Natur sein:

(i) Defekte oder ganz ausgefallene Sensoren liefern falsche oder gar keine Daten,
(ii) Bauteile sind beschädigt,
(iii) das System wurde durch eine externe Quelle (z. B. ein Hackerangriff) manipuliert.

Es ist in von hoher Bedeutung, solche Anomalien zu erkennen, da es beispielsweise möglich ist, über solche Angriffe die Kontrolle über ein Kraftfahrzeug zu übernehmen.
Es ist möglich, ein Verfahren zur Detektion von Anomalien regelbasiert zu implementieren. Hierbei wird für eine Auswahl an möglichem, nicht-normalen Verhalten eine Liste an Abfragen, Überprüfungen und Folgerungen erstellt, anhand der das System verfährt.
Ein anderer möglicher Ansatz verwendet einen Satz an Beispieldaten, die zusätzliche Information enthalten, ob es sich dabei um einen normalen oder anormalen Zustand handelt. Geeignete Systeme wie z. B. neuronale Netze können dann anhand dieser Labels trainiert werden (überwachtes Lernen), um später ähnliche Zustände erkennen zu können.
Eine Schwierigkeit regelbasierter oder auf dem Training gelabelter Daten basierender Verfahren ist hierbei, dass die Art und Weise einer möglichen Anomalie vor deren Eintreten bekannt sein sollte. Alleine der spezielle Fall eines (Hacker-)Angriffs auf ein System, um dessen Verhalten zu manipulieren, macht klar, dass eine solche Annahme mit großem Aufwand verbunden ist.

Es ist ein Vorteil dieses Verfahrens, dass Anomalien im Datenverkehr des Kommunikationsnetzwerks selbstständig erkannt werden können, wobei kein Vorwissen über ihre Art und ihr Zustandekommen notwendig ist. Die Anomalie-Erkennung beruht also ausschließlich auf der Kenntnis des Normalverhaltens des jeweiligen Systems.

Das Verfahren basiert auf einem unüberwachten Lernansatz, d.h. dass für die Konfiguration, also dem Training, ausschließlich Daten benötigt werden, die das Normalverhalten des Systems widerspiegeln. Für das Training werden weder Daten benötigt, die Angriffe enthalten, noch ist spezielles Domänenwissen vonnöten, d.h. das Verfahren ist unabhängig von der physikalischen oder technischen Bedeutung der zugrundeliegenden Daten. Daher kann dieses System besonders einfach auf andere Domänen übertragen werden.

Darüber hinaus dieses Verfahren besonders einfach auf weitere Kommunikationsteilnehmer im Kommunikationsnetzwerk erweiterbar.

Ferner bietet das Verfahren den Vorteil, dass kategorische Daten ebenfalls berücksichtigt werden können, beispielsweise durch "one-hot encoding". Das Verfahren ist sowohl "online" als auch "offline" anwendbar, d.h. das Verfahren kann auf einem Steuergerät, das im Kraftfahrzeug verbaut ist, ablaufen, oder auch auf einem Diagnosesystem außerhalb des Kraftfahrzeugs, beispielsweise auf einem externen Rechner.

In einem ersten Aspekt betrifft die Erfindung daher ein Verfahren zum Ermitteln, ob in einem Kommunikationsnetzwerk, insbesondere eines Kraftfahrzeugs, eine Anomalie, insbesondere z.B. ein Hackerangriff, vorliegt, wobei in einer ersten Phase ein Diskriminator trainiert wird, zu erkennen, ob über das Kommunikationsnetzwerk übermittelte Nachrichten auf ein Vorliegen der Anomalie hinweisen,

wobei beim Trainieren dem Diskriminator Normaldaten und von einem Generator erzeugte künstliche Daten als Eingangsgröße zugeführt werden und der Diskriminator darauf trainiert wird, zu erkennen, dass keine Anomalie vorliegt, wenn ihm Normaldaten zugeführt werden und dass eine Anomalie vorliegt, wenn ihm künstliche Daten zugeführt werden,

wobei in einer zweiten Phase der Generator darauf trainiert wird, künstliche Daten derart zu erzeugen, die, wenn sie dem Diskriminator zugeführt werden, von diesem mit möglichst großer Wahrscheinlichkeit als Normaldaten klassifiziert werden, (was bedeutet, dass der Diskriminator möglichst schlecht erkennen kann, dass eine Anomalie vorliegt, wenn ihm die vom Generator erzeugten künstlichen Daten zugeführt werden),

wobei in einer dritten Phase der Diskriminator ein Inhalt von über das Kommunikationsnetzwerk empfangenen Nachrichten als Eingangsgröße zugeführt wird, abhängig von der Eingangsgröße eine Ausgangsgröße ermittelt wird und abhängig von der Ausgangsgröße darauf entschieden wird, ob die Anomalie vorliegt, oder nicht.

Trainieren, also überwachtes bzw. unüberwachtes Lernen (engl. *supervised learning* bzw. *unsupervised learning*) des Diskriminators bzw. des Generators heißt hierbei wie üblich, dass die Parameter, die das jeweilige System charakterisieren, mit Hilfe des aktuellen Eingangs- und Ausgangsverhaltens des Systems adaptiert werden, um zu erreichen, dass die dem Training zu Grunde liegende Kostenfunktion, die das erwünschte Verhalten des Systems beinhaltet, minimiert wird. Hierzu kann insbesondere Backpropagation eingesetzt werden.

Die grundsätzliche Idee besteht also darin, Generator und Diskriminator gegenseitig konkurrieren zu lassen, um dadurch beide schrittweise zu verbessern. Generator und Diskriminator haben unterschiedliche Aufgaben: Der Generator erzeugt aus Rauschen, dem eine beliebige Verteilung zu Grunde liegen kann, die künstlichen Daten, die beispielsweise als Daten interpretiert werden können, die sich ergäben, wenn das Kommunikationsnetzwerk (beispielsweise von einem Hacker) angegriffen würde. Der Diskriminator hat die Aufgabe, zwischen künstlichen Daten und Normaldaten zu unterscheiden und ist beispielsweise so konfiguriert, dass sein Resultat als Wahrscheinlichkeit interpretiert werden kann, dass Normaldaten vorliegen. Generator und Diskriminator werden hierbei simultan trainiert und konkurrieren gegeneinander. Der Generator lernt, Daten zu generieren, die Normaldaten immer ähnlicher werden, der Diskriminator hingegen wird immer besser darin, künstliche Daten von Normaldaten zu unterscheiden.

Der Generator nimmt also die Rolle eines Angreifers ein, der im Training kontinuierlich versucht, immer neue Angriffsstrategien zu finden, die der Diskriminator nicht als solche erkennt. Im Gegenzug wird der Diskriminator durch die spezielle Trainingsstrategie darauf konditioniert, neue Angriffe oder Anomalien als solche zu erkennen.

Es ist vorgesehen, dass das Training des Diskriminators in der ersten Phase und das Training des Generators in der zweiten Phase vor Durchführung der dritten Phase wechselseitig mehrfach wiederholt durchgeführt werden. D. h. die beiden Schritte des Trainings des Diskriminators und des Trainings des Generators werden wechselweise in Batchläufen durchgeführt, so dass Generator und Diskriminator möglichst gut voneinander lernen können.

Ist der Diskriminator hinreichend trainiert, kann er beispielsweise zur Detektion von Anomalien oder auch von Angriffen eingesetzt werden, da er in der Lage ist, Normaldaten von anomalen Daten zuverlässig zu unterscheiden. Die Prädiktion des Diskriminators auf ungesehenen Daten kann als Wahrscheinlichkeit interpretiert werden, dass eine Anomalie bzw. ein Angriff vorliegt.

Dies kann dadurch realisiert werden, dass beim Training des Diskriminators aus dem ursprünglich unüberwachten Lernproblem ein überwachtes Lernproblem erzeugt wird. Hierzu werden dem Diskriminator sowohl Normaldaten als auch künstliche Daten zugeführt und beim Lernen wird eine Information berücksichtigt, welche der Eingangsdaten Normaldaten sind und welche nicht (d.h. es werden zu den Eingangsdaten Label generiert). Anhand der Ausgabe des Diskriminators und der zugehörigen Label können die Parameter des Diskriminators per Backpropagation so adaptiert werden, dass die richtigen Label besser prädiziert werden.

Um den Generator zu trainieren, wird das Gesamtsystem aus Generator und Diskriminator betrachtet. Hierbei werden dem Diskriminator die künstlich generierten Daten des Generators zugeführt. Die Ausgangsgröße des Diskriminators kann charakterisieren, zu welchem Grad dieser die Daten als künstlich ansieht. Dies kann mittels Gradienteninformation vom Diskriminator zum Generator zurückpropagiert werden, wodurch bekannt ist, wie dessen Parameter adaptiert werden müssen, um bessere Angriffsstrategien auf den Diskriminator zu kreieren. In diesem Schritt werden ausschließlich die Parameter des Generators adaptiert.

Beide Schritte können wie beschrieben iterativ wiederholt werden, um sowohl Diskriminator als auch Generator schrittweise zu verbessern.

In einer Weiterbildung kann vorgesehen sein, dass dem Generator Zufallsgrößen zugeführt werden und der Generator abhängig von den Zufallsgrößen die künstlichen Daten erzeugt.

"Zufallsgrößen" kann hierbei nicht nur bedeuten, dass die Zufallsgrößen einmalig (pseudo-)zufällig gewählt werden, sondern dass vor der Erzeugung künstlicher Daten jeweils vorher neue Zufallsgrößen generiert werden. Den Zufallsgrößen können hierbei beliebige Verteilungen zu Grunde liegen, insbesondere können die Zufallsgrößen mit einem (Pseudo-)Zufallszahlengenerator so generiert werden, dass sie weißem Rauschen entsprechen.

Vorzugsweise wird in der ersten Phase der Diskriminator wechselweise mit Batches trainiert, die ausschließlich Normaldaten oder ausschließlich künstliche Daten umfassen. Ein solches Aufteilen der Batchläufe ermöglicht ein stabileres Training.

Es ist selbstverständlich auch möglich, dass ein Batch gemischt Normaldaten und künstliche Daten umfasst.

Insbesondere ist es möglich, dass zu Beginn der ersten Phase der Diskriminator zunächst mit mindestens einem Batch trainiert wird, der ausschließlich Normaldaten umfasst.

Mit anderen Worten wird der Diskriminator vorkonditioniert. Insbesondere ist es zur Vorkonditionierung auch möglich, dass der Diskriminator mit mehreren Batchläufen trainiert wird, die ausschließlich Normaldaten umfassen. Durch eine Vorkonditionierung kann das Training des Diskriminators besonders effizient sein.

Es ist möglich, dass Diskriminator und/oder Generator als maschinelles Lernsystem, insbesondere als (ggf. tiefes) neuronales Netz implementiert sind. Dies ist allerdings nicht notwendig. Es ist sowohl für den Diskriminator als auch für den Generator möglich, eine beliebige parametrierbare und differenzierbare Funktion zu verwenden.

Ein tiefes neuronales Netz umfasst hierbei mindestens zwei Schichten und ist insbesondere in der Lage, komplexe und nichtlineare Funktionen nachzubilden. Es sind verschiedenste Ausprägungen neuronaler Netze denkbar. Mögliche Typen umfassen feed forward, rekurrente convolutional, deconvolutional, LSTM oder Kombinationen dieser Typen.

In weiteren Aspekten betrifft die Erfindung ein Computerprogramm, welches eingerichtet ist, eines der vorgenannten Verfahren auszuführen, wenn es auf einem Computer ausgeführt wird, ein maschinenlesbares Speichermedium, auf dem dieses Computerprogramm gespeichert ist (wobei dieses Speichermedium selbstverständlich räumlich verteilt angeordnet sein kann, z.B. bei paralleler Ausführung über mehrere Computer verteilt), und eine Vorrichtung, insbesondere eine Überwachungseinheit, die eingerichtet ist, eines dieser Verfahren auszuführen (beispielsweise durch Abspielen des vorgenannten Computerprogramms).

Nachfolgend werden Ausführungsformen der Erfindung unter Bezugnahme auf die beiliegenden Zeichnungen näher erläutert. In den Zeichnungen zeigen:

Figur 1    schematisch ein Kommunikationsnetzwerk in einem Kraftfahrzeug;

Figur 2    schematisch einen Signalfluss in der Überwachungseinheit;

Figur 3    einen beispielhaften eines Systems zum Training von Diskriminator und Generator;

Figur 4    in einem Flussdiagramm eine Ausführungsform des Verfahrens Detektieren von Anomalien;

Figur 5    in einem Flussdiagramm eine Ausführungsform des Verfahrens zum Trainieren von Diskriminator und Generator.

Beschreibung der Ausführungsbeispiele

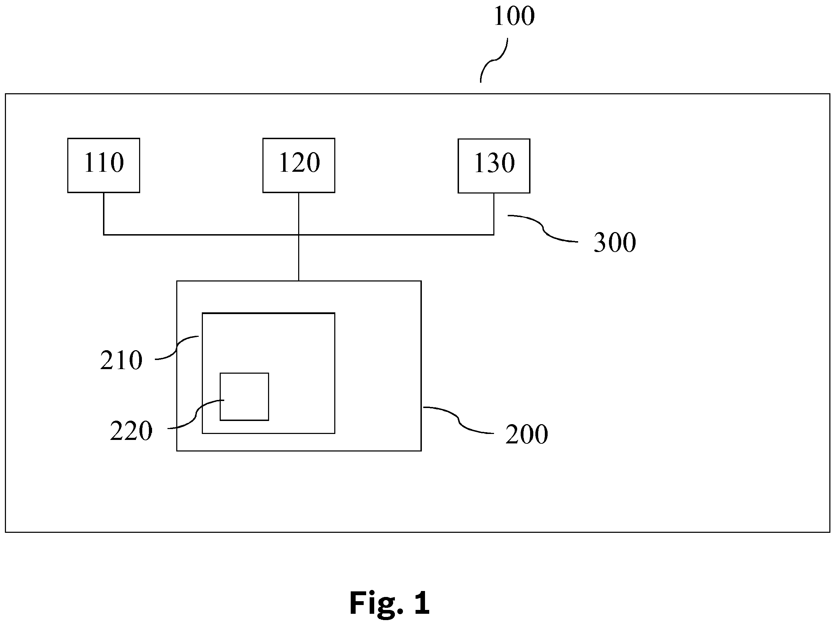

Figur 1 zeigt ein beispielhaftes Kommunikationsnetzwerk in einem Kraftfahrzeug 100. Das Kommunikationsnetzwerk ist in diesem Beispiel durch einen CAN-Bus 300 gegeben, über den Kommunikationsteilnehmer 110, 120 und 130 durch Austausch von Nachrichten miteinander kommunizieren können. Die Überwachungseinheit 200 ist ebenfalls an den CAN-Bus 300 angeschlossen und kann Nachrichten, die die Kommunikationsteilnehmer 110, 120, 130 einander zuschicken ebenfalls empfangen und ggf. selbst eine Nachricht auf den CAN-Bus 300 absetzen, um bei erkannter Anomalie Gegenmaßnahmen einzuleiten.

Selbstverständlich ist die Erfindung nicht auf einen CAN-Bus beschränkt. Stattdessen kann sie auch in Kraftfahrzeugen angewandt werden, in denen ein anderer Bus, insbesondere ein Feldbus, oder eine Kombination mehrerer Bus-Systeme vorhanden sind.

Die Überwachungseinheit 200 weist einen Computer 210 auf, der ein maschinenlesbares Speichermedium 220 aufweist. Auf diesem maschinenlesbaren Speichermedium 220 kann ein Computerprogramm gespeichert sein, dass Anweisungen umfasst, die wenn sie von dem Computer 210 ausgeführt werden, das erfindungsgemäße Verfahren ausführen, insbesondere das in Figur 6 illustrierte Verfahren. Selbstverständlich ist es auch möglich, dass Teile des Verfahrens oder das gesamte Verfahren in Hardware implementiert sind.

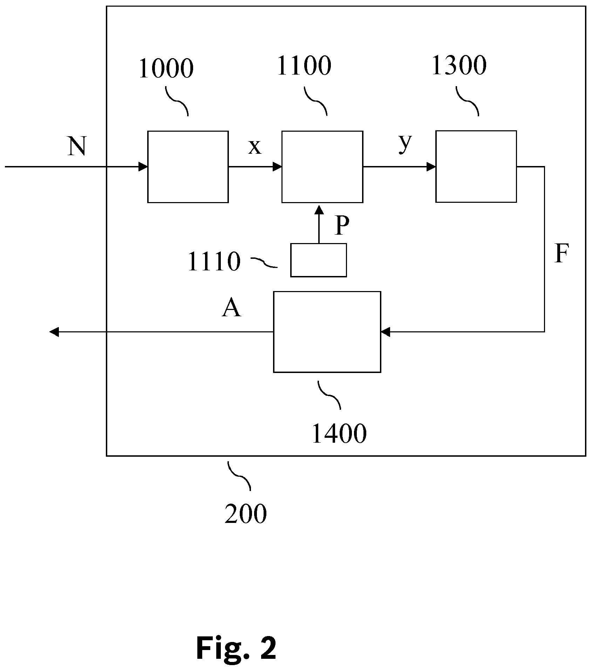

Figur 2 illustriert den Signalfluss innerhalb der Überwachungseinheit 200. Einem Eingangsblock 1000 wird eine Nachricht N zugeführt, die die Überwachungseinheit 200 über den CAN-Bus 300 empfangen hat. Der Eingangsblock extrahiert aus der Nachricht eine Eingangsgröße x, beispielsweise einen Nutzdateninhalt (englisch "pay load") und/oder Metadaten der Nachricht N. Diese Eingangsgröße wird dem Diskriminator 1100 zugeführt, der hieraus die Ausgangsgröße y ermittelt. Die Ausgangsgröße y kann eine Wahrscheinlichkeit quantifizieren, dass im Kommunikationsnetzwerk eine Anomalie vorliegt. Der Diskriminator 1100 wird durch Parameter P parametriert, die von einem ersten Parameterspeicher 1110 zur Verfügung gestellt werden.

Die Ausgangsgröße y wird beispielhaft einem Überwachungsblock 1300 zugeführt, der abhängig hiervon ein Fehlersignal F ermittelt. Das Fehlersignal F charakterisiert, ob im Kommunikationsnetzwert, also in der Kommunikation zwischen den Kommunikationsteilnehmern 110, 120, 130 über den CAN-Bus 300 oder in der Überwachungseinheit 200 eine Anomalie vorliegt. Beispielsweise kann das Fehlersignal F ein binär codiertes Signal sein, z.B. "0" = "keine Anomalie liegt vor", "1" = eine Anomalie liegt vor. Das Fehlersignal F kann beispielsweise auf den Wert "1" gesetzt werden, wenn der Wert des Ausgangssignals y einen vorgebbaren Schwellwert überschreitet.

Das Fehlersignal F wird optional einer Ansteuerung 1400 zugeführt, die hieraus eine Ansteuergröße A ermittelt, die über den CAN-Bus 300 einem oder mehreren der Kommunikationsteilnehmer 110, 120, 130 des Kommunikationsnetzwerks übermittelt wird.

Beispielsweise ist es möglich, dass das Kraftfahrzeug 100 in einen abgesicherten Zustand überführt wird. Handelt es sich bei dem Kraftfahrzeug 100 um ein autonom fahrbares Kraftfahrzeug 100, kann ein Fahrer aufgefordert werden, die Kontrolle des autonom fahrenden Kraftfahrzeugs 100 wieder zu übernehmen. Alternativ oder zusätzlich ist es möglich, dass die Kommunikation über den CAN-Bus 300 auf essentielle Nachrichten eingeschränkt wird.

Enthält das Fehlersignal F bereits spezifische Informationen darüber was die Ursache für die Anomalie ist, kann die Ansteuergröße A eine spezifische Gegenmaßnahme einleiten, wie etwa einen der Kommunikationsteilnehmer 110, 120, 130 vom Datenverkehr über den CAN-Bus abzuschneiden.

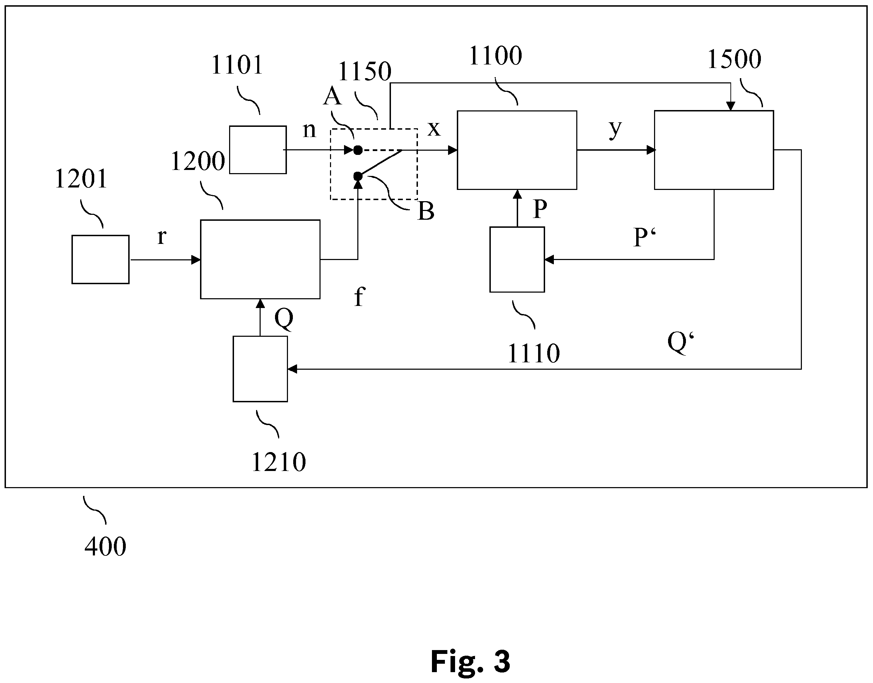

Figur 3 illustriert den Aufbau einer Vorrichtung 400 zum Trainieren des Diskriminators 1100 gemäß einer Ausführungsform. Die Vorrichtung 400 kann als Computerprogramm implementiert und auf dem maschinenlesbaren Speichermedium 220 der Überwachungseinheit 200 implementiert sein. Sie kann aber auch in einer separaten Vorrichtung implementiert sein, beispielsweise als Computerprogramm, das auf einem PC abläuft.

Über einen Schalter 1150 kann ausgewählt werden, welche Daten dem Generator 1100 als Eingangsdaten zugeführt werden. Dem Generator 1100 werden als Eingangsdaten x in einer ersten Schalterstellung A Normaldaten n zugeführt, die von einem Block 1101 generiert werden, beispielsweise, indem sie aus einer Datei ausgelesen werden.

In einer zweiten Schalterstellung B werden dem Diskriminator 1100 künstliche Daten f zugeführt, die von einem Generator 1200 erzeugt werden. Der Generator 1200 erzeugt die künstlichen Daten f abhängig von Zufallsgrößen r, die ihm von einem Block 1201 zugeführt werden. Block 1201 kann beispielsweise einen Pseudo-Zufallszahlengenerator umfassen, oder einen (beispielsweise in HW implementierten) Zufallszahlengenerator.

Der Diskriminator 1100 wird durch erste Parameter P parametriert, die von einem ersten Parameterspeicher 1110 zur Verfügung gestellt werden. Der Generator 1200 wird durch zweite Parameter Q parametriert, die von einem zweiten Parameterspeicher 1210 zur Verfügung gestellt werden. Bei dem ersten Parameterspeicher 1110 und/oder bei dem zweiten Parameterspeicher 1210 kann es sich beispielsweise um dedizierte Speicherbereiche in einem maschinenlesbaren Speichermedium handeln.

Diskriminator 1100 und/oder Generator 1200 können jeweils durch ein neuronales Netz realisiert sein, beispielsweise durch eine Hintereinanderschaltung mehrerer *fully-connected layer*.

Der Generator 1100 erzeugt die Ausgangsgröße y und führt sie einem Block 1500 zu. Block 1500 wird optional die Stellung des Schalters 1150 übermittelt.

Block 1500 ermittelt neue Parameter P', Q', die dem ersten Parameterspeicher 1110 und/oder dem zweiten Parameterspeicher 1120 übermittelt werden. Die neuen ersten Parameter P' ersetzen im ersten Parameterspeicher 1110 die aktuellen ersten Parameter P und/oder die neuen zweiten Parameter Q' ersetzen im zweiten Parameterspeicher 1120 die aktuellen zweiten Parameter Q.

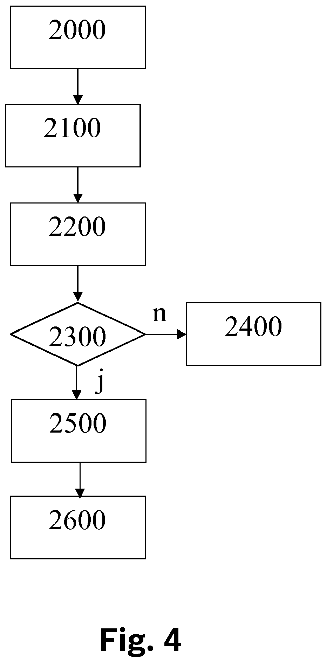

Abbildung 4 illustriert in einem Flussdiagramm eine Ausführungsform des Verfahrens, wie es in der in Figur 2 dargestellten Überwachungseinheit 200 ablaufen kann.

Zunächst wird die Nachricht N über den CAN-Bus 300 empfangen (2000) und vom Eingangsblock 1000 die Eingangsgröße x extrahiert (2100). Dann ermittelt (2200) der Diskriminator 1100 aus der Eingangsgröße x und den ersten Parametern P die (skalare) Ausgangsgröße y.

D.h. der Diskriminator 1100 setzt eine üblicherweise nichtlineare mathematische Beziehung d

$$y = d(x, P) \qquad\qquad \text{(Formel 1)}$$

um. Die Funktion d kann beispielsweise wie beschrieben durch ein neuronales Netzwerk gegeben sein.

Nun wird verglichen (2300), ob der Wert der Ausgangsgröße y einen vorgebbaren Schwellwert überschreitet. Ist dies nicht der Fall (2400), wird entschieden, dass keine Anomalie vorliegt, und die Fehlergröße F wird auf den Wert "0" gesetzt. Ist dies jedoch der Fall (2500), wird entschieden, dass eine Anomalie vorliegt, und die Fehlergröße F wird auf den Wert "1" gesetzt, was bewirkt, dass Gegenmaßnahmen eingeleitet (2600) werden, beispielsweise, indem das Kraftfahrzeug 100 in einen gesicherten Modus überführt wird. Damit endet das Verfahren.

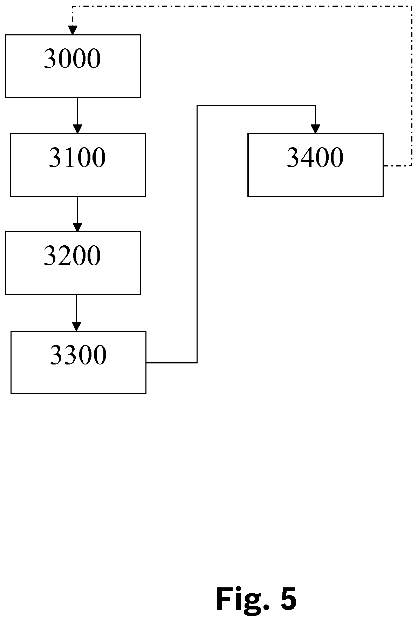

Figur 5 illustriert in einem Flussdiagramm eine Ausführungsform des Verfahrens, wie es von der Vorrichtung 400 zum Trainieren des Diskriminators 1100 ablaufen kann.

Zunächst werden Normaldaten n von Block 1101 generiert (3000), beispielsweise aus einer Datei ausgelesen. Dann werden Zufallsgrößen r generiert (3100), beispielsweise ebenfalls aus einer Datei ausgelesen (nachdem sie vorher von einem echten Zufallszahlengenerator generiert wurden). Die Zufallsgrößen r werden dem Generator 1200 zugeführt, der abhängig von Zufallsgrößen r und zweiten Parametern Q die künstlichen Daten f erzeugt (3200).

D.h. der Generator 1200 setzt eine üblicherweise nichtlineare mathematische Beziehung g

$$f = g(r, Q) \qquad\qquad \text{(Formel 2)}$$

um. Die Funktion g kann beispielsweise wie beschrieben durch ein neuronales Netzwerk gegeben sein.

Nun wird der Diskriminator 1100 überwacht trainiert (3300): Durch Wahl der Schalterstellung A, B werden dem Diskriminator 1100 wechselweise Batches von Normaldaten n bzw. künstlichen Daten f als Eingangsgröße x zugeführt, und wie in Formel 1 beschrieben Ausgangsgrößen y ermittelt.

Die Wahl der Schalterstellung A, B vermittelt also der Eingangsgröße x ein Label, je nachdem, ob die Eingangsgröße x ein Normaldatum n oder ein künstliches Datum f ist. Daher ist es selbstverständlich auch möglich, dem Diskriminator gemischte Batches zuzuführen, die sowohl Normaldaten n als auch künstliche Größen f enthalten.

Durch ein Gradientenabstiegsverfahren wird nun eine von den ermittelten Ausgangsgrößen y, der Schalterstellung A, B und von den ersten Parametern P abhängige Kostenfunktion k(y; P) (englisch: *loss function*) optimiert, beispielsweise (wenn der Diskriminator 1100 durch ein neuronales Netz gegeben ist) mittels Backpropagation. Die Kostenfunktion k ist dabei derart gewählt, dass sie umso kleinere Werte annimmt, je häufiger der Diskriminator 1100 auf das Vorliegen einer Anomalie entschieden hat, wenn ihm künstliche Daten f zugeführt wurden, und auf die Abwesenheit einer Anomalie entschieden hat, wenn ihm Normaldaten n zugeführt wurden. Dies kann im Ausführungsbeispiel dadurch geschehen, dass die Kostenfunktion k so realisiert ist, dass der Ausgabewert y des Diskriminators 1100 mit dem wahren Label A, B für jeden Trainingspunkt der Eingangsdaten x verglichen wird. Sowohl auf künstlichen Daten als auch auf normalen Daten sollte diese Abweichung klein sein.

Somit werden in jeder Trainingsiteration neue Parameterwerte P* bestimmt, die beispielsweise durch ein numerisches, iteratives Verfahren die Lösung der Gleichung

$$P' = \arg\min_{P} k(y; P)$$

approximieren. Die ersten Parameterwerte P werden durch die neuen Parameterwerte P* ersetzt.

Dann wird der Generator 1200 trainiert (3400). Es werden erneut Zufallsgrößen r generiert (optional können auch die oben in Schritt 3100 bereits generierten Zufallsgrößen r übernommen werden) dem Generator 1200 zugeführt, und dann die künstlichen Daten f in Abhängigkeit der aktuellen zweiten Parameterwerte Q generiert. Schalter 1150 wird in der zweiten Schalterstellung B gehalten und die künstlichen Daten f dem Diskriminator 1100 zugeführt. Der Diskriminator 1100 ermittelt abhängig von den aktuellen ersten Parameterwerten P erneut die Ausgangsgröße y. Block 1500 ermittelt nun durch ein Gradientenabstiegsverfahren eine von der Ausgangsgröße y, von den ersten Parametern P und zweiten Parametern Q abhängige Kostenfunktion abhängige zweite Kostenfunktion m(y; P, Q). optimiert,

Ist der Diskriminator 1100 so konfiguriert, dass die Ausgangsgröße y als Wahrscheinlichkeit interpretiert wird, dass es sich bei der Eingangsgröße x um Normaldaten n handelt, kann die zweite Kostenfunktion m(y;P,Q) so konfiguriert werden, dass sie angibt, wie wahrscheinlich es sich um Normaldaten n handelt. Die Kostenfunktion m(y;P,Q) kann dann minimiert werden, beispielsweise durch Backpropagation (wenn der Diskriminator 1100 und der Generator 1200 neuronale Netze sind).

Hierdurch kann erreicht werden, dass der Diskriminator 1100 vom Generator 1200 generierte künstliche Daten f wahrscheinlicher als Normaldaten n ansieht. Somit werden in jeder Trainingsiteration neue zweite Parameterwerte Q* bestimmt, die beispielsweise durch ein numerisches, iteratives Verfahren die Lösung der Gleichung

$$Q' = \arg\min_Q m(y; P, Q)$$

approximieren. Die zweiten Parameterwerte Q werden durch die neuen zweiten Parameterwerte Q* ermittelt.

Vorzugsweise verzweigt das Verfahren zurück zu Schritt 3000 und führt die Schritte 3000 bis 3400 wiederholt aus, beispielsweise eine vorgebbare Anzahl von Wiederholungen oder bis ein Konvergenzkriterium des ersten Parameterwerts P und/oder des zweiten Parameterwerts Q erfüllt ist.

Damit endet das Verfahren.

Selbstverständlich sind Variationen des Trainingsverfahrens denkbar, um das Training zu optimieren und/oder zu stabilisieren. Beispielsweise kann vorgesehen sein, dass in regelmäßigen Intervallen, beispielsweise nach einer vorgebbaren Anzahl an Iterationen, der Diskriminator 1100 mit mehr Batches trainiert wird als der Generator 1200. Weitere Verfeinerungen sind denkbar.

## Patentansprüche

1. Verfahren zum Ermitteln, ob in einem Kommunikationsnetzwerk eines Kraftfahrzeugs (100), eine Anomalie vorliegt, wobei in einer ersten Phase ein Diskriminator (1100) trainiert wird, zu erkennen, ob über das Kommunikationsnetzwerk übermittelte Nachrichten (N) auf ein Vorliegen der Anomalie hinweisen, wobei beim Trainieren dem Diskriminator (1100) Normaldaten (n) und von einem Generator (1200) erzeugte künstliche Daten (f) als Eingangsgröße (x) zugeführt werden und der Diskriminator (1100) darauf trainiert wird, zu erkennen, dass keine Anomalie vorliegt, wenn ihm Normaldaten (n) zugeführt werden und dass eine Anomalie vorliegt, wenn ihm künstliche Daten (f) zugeführt werden, das Verfahren beinhaltet die weiteren Schritte:

   dass in einer zweiten Phase der Generator (1200) darauf trainiert wird, künstliche Daten (f) derart zu erzeugen, dass sie, wenn sie dem Diskriminator (1100) zugeführt werden, von diesem mit möglichst großer Wahrscheinlichkeit als Normaldaten (n) klassifiziert werden,
   dass in einer dritten Phase dem Diskriminator (1100) ein Inhalt von über das Kommunikationsnetzwerk empfangenen Nachrichten (N) als Eingangsgröße (x) zugeführt wird, abhängig von der Eingangsgröße (x) eine Ausgangsgröße (y) ermittelt wird und abhängig von der Ausgangsgröße (y) darauf entschieden wird, ob die Anomalie vorliegt, oder nicht, und
   dass das Training des Diskriminators (1100) in der ersten Phase und das Training des Generators (1200) in der zweiten Phase vor Durchführung der dritten Phase wechselseitig mehrfach wiederholt durchgeführt werden.

2. Verfahren nach Anspruch 1, wobei in der zweiten Phase das Gesamtsystem aus Generator (1200) und Diskriminator (1100 trainiert wird, wobei ausschließlich Parameter (Q), die den Generator (1200) charakterisieren, angepasst werden.

3. Verfahren nach einem der Ansprüche 1 bis 2, wobei dem Generator (1200) Zufallsgrößen (r) zugeführt werden und der Generator abhängig von den Zufallsgrößen (r) die künstlichen Daten (f) erzeugt.

4. Verfahren nach einem der Ansprüche 1 bis 3, wobei in der ersten Phase der Diskriminator (1100) mit gemischten Batches trainiert wird, die sowohl Normaldaten (n) als auch künstliche Daten (f) umfassen.

5. Verfahren nach einem der Ansprüche 1 bis 3 wobei in der ersten Phase der Diskriminator (1100) wechselweise mit Batches trainiert wird, die ausschließlich Normaldaten (n) oder ausschließlich künstliche Daten (f) umfassen.

6. Verfahren nach Anspruch 5, wobei zu Beginn eines ersten Durchlaufs der ersten Phase der Diskriminator (1100) zunächst mit mindestens einem Batch trainiert wird, der ausschließlich Normaldaten (n) umfasst.

**7.** Verfahren nach einem der vorherigen Ansprüche, wobei der Diskriminator (1100) und/oder der Generator (1200) als maschinelles Lernsystem implementiert sind.

**8.** Computerprogramm, welches eingerichtet ist, das Verfahren nach einem der vorhergehenden Schritte auszuführen.

**9.** Maschinenlesbares Speichermedium (220), auf dem das Computerprogramm nach Anspruch 8 gespeichert ist.

**10.** Überwachungseinheit (200) umfassend einen Diskriminator (1100) und einen Generator (1200), die eingerichtet ist, das Verfahren nach einem der Ansprüche 1 bis 7 durchzuführen.


**Claims**

**1.** Method for determining whether an anomaly is present in a communication network of a motor vehicle (100), wherein, in a first phase, a discriminator (1100) is trained to recognize whether messages (N) transmitted over the communication work indicate the presence of an anomaly,
wherein, in the training, the discriminator (1100) is supplied with normal data (n) and artificial data (f) generated by a generator (1200) as input variable (x) and the discriminator (1100) is trained to recognize that no anomaly is present when normal data (n) are supplied thereto and that an anomaly is present when artificial data (f) are supplied thereto, the method comprising the following further steps:

in a second phase, the generator (1200) is trained to generate artificial data (f) such that said data, when they are supplied to the discriminator (1100), are classified thereby with the greatest possible probability as normal data (n),
in a third phase, the discriminator (1100) is supplied with content of messages (N) received over the communication network as input variable (x), an output variable (y) is determined based on the input variable (x) and a decision is made as to whether or not the anomaly is present based on the output variable (y), and
the training of the discriminator (1100) in the first phase and the training of the generator (1200) in the second phase are performed alternately, multiple times and repeatedly before the third phase is performed.

**2.** Method according to Claim 1, wherein, in the second phase, the overall system consisting of generator (1200) and discriminator (1100) is trained, wherein only parameters (Q) that characterize the generator (1200) are adapted.

**3.** Method according to either of Claims 1 and 2, wherein the generator (1200) is supplied with random variables (r) and the generator generates the artificial data (f) based on the random variables (r).

**4.** Method according to one of Claims 1 to 3, wherein, in the first phase, the discriminator (1100) is trained with mixed batches that comprise both normal data (n) and artificial data (f).

**5.** Method according to one of Claims 1 to 3, wherein, in the first phase, the discriminator (1100) is trained alternately with batches that comprise only normal data (n) or only artificial data (f).

**6.** Method according to Claim 5, wherein, at the start of a first run of the first phase, the discriminator (1100) is first trained with at least one batch that comprises only normal data (n).

**7.** Method according to one of the preceding claims, wherein the discriminator (1100) and/or the generator (1200) are/is implemented as a machine learning system.

**8.** Computer program that is configured to execute the method according to one of the preceding steps.

**9.** Machine-readable storage medium (220) on which the computer program according to Claim 8 is stored.

**10.** Monitoring unit (200) comprising a discriminator (1100) and a generator (1200), the monitoring unit being configured to perform the method according to one of Claims 1 to 7.

**Revendications**

1. Procédé pour déterminer si une anomalie est présente dans un réseau de communication d'un véhicule automobile (100), un discriminateur (1100) étant entraîné dans une première phase en vue de reconnaître si des messages (N) communiqués par le biais du réseau de communication indiquent la présence de l'anomalie, des données normales (n) et des données artificielles (f), générées par un générateur (1200), étant acheminées en tant que grandeur d'entrée (x) lors de l'entraînement du discriminateur (1100) et le discriminateur (1100) étant entraîné à reconnaître qu'il n'existe aucune anomalie lorsque des données normales (n) lui sont acheminées et qu'il existe une anomalie lorsque des données artificielles (f) lui sont acheminées, le procédé comprenant les étapes supplémentaires :

   dans une deuxième phase, le générateur (1200) est entraîné à générer des données artificielles (f) de telle sorte que lorsqu'elles sont acheminées au discriminateur (1100), elles sont classifiées par celui-ci comme des données normales (n) avec la plus grande probabilité possible,
   dans une troisième phase, un contenu de messages (N) reçus par le biais du réseau de communication est acheminé au discriminateur (1100) en tant que grandeur d'entrée (x), une grandeur de sortie (y) est déterminée en fonction de la grandeur d'entrée (x) et une décision de la présence ou non de l'anomalie est prise en fonction de la grandeur de sortie (y), et
   l'entraînement du discriminateur (1100) dans la première phase et l'entraînement du générateur (1200) dans la deuxième phase sont effectués en alternance de manière répétée plusieurs fois avant l'exécution de la troisième phase.

2. Procédé selon la revendication 1, le système complet composé du générateur (1200) et du discriminateur (1100) étant entraîné dans la deuxième phase, uniquement les paramètres (Q) qui caractérisent le générateur (1200) étant adaptés.

3. Procédé selon l'une des revendications 1 à 2, des grandeurs aléatoires (r) étant acheminées au générateur (1200) et le générateur générant les données artificielles (f) en fonction des grandeurs aléatoires (r) .

4. Procédé selon l'une des revendications 1 à 3, le discriminateur (1100) étant, dans la première phase, entraîné avec des lots mélangés qui comprennent à la fois des données normales (n) et des données artificielles (f) .

5. Procédé selon l'une des revendications 1 à 3, le discriminateur (1100) étant, dans la première phase, entraîné en alternance avec des lots qui comprennent exclusivement des données normales (n) ou exclusivement des données artificielles (f).

6. Procédé selon la revendication 5, au début d'un premier cycle de la première phase, le discriminateur (1100) étant tout d'abord entraîné avec un lot qui comporte exclusivement des données normales (n).

7. Procédé selon l'une des revendications précédentes, le discriminateur (1100) et/ou le générateur (1200) étant mis en œuvre sous la forme d'un système d'apprentissage automatique.

8. Programme informatique, lequel est conçu pour mettre en œuvre le procédé selon l'une des étapes précédentes.

9. Support de stockage lisible par machine (220), sur lequel est enregistré le programme informatique selon la revendication 8.

10. Unité de surveillance (200), comprenant un discriminateur (1100) et un générateur (1200), qui est conçue pour mettre en œuvre le procédé selon l'une des revendications 1 à 7.

Fig. 1

**Fig. 2**

**Fig. 3**

EP 3 662 639 B1

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009026995 A1
- US 2017126711 A1